# EUROPÄISCHE PATENTSCHRIFT

(11) **EP 1 643 712 B1**
(45) Veröffentlichungstag und Bekanntmachung des Hinweises auf die Patenterteilung: **06.12.2006**
(21) Anmeldenummer: 04292353.2
(22) Anmeldetag: 04.10.2004
(51) Int. Cl.: H04L 29/06

(54) **Vorrichtungen und Verfahren zum Führen von bidirektionellen Verbindungen über eine zwischengeschaltete Firewall mit Adresstransformationsgerät**
Method and devices for creating bidirectional connections through a firewall with an address conversion device
Méthode et dispositifs pour mettre en oeuvre des connections bidirectionnelles à travers un pare-feu comportant un dispositif de transformation d'adresse

(43) Veröffentlichungstag der Anmeldung: 05.04.2006
(73) Patentinhaber: ALCATEL, 75008 Paris (FR)
(72) Erfinder: Oberle, Karsten, 68199 Mannheim (DE); Domschitz, Peter, 70191 Stuttgart (DE)
(74) Vertreter: Brose, Gerhard

(56) Entgegenhaltungen:
- WO-A-03/083692
- US-A1- 2003 126 230
- US-A1- 2003 140 142

## Beschreibung

Die Erfindung betrifft ein Verfahren zum Führen von bidirektionalen Verbindungen in einem Telekommunikationsnetz mittels eines Signalisierungs-Protokolls über eine zwischengeschaltete Firewall mit Adresstransformationsgerät nach dem Oberbegriff des Anspruchs 1, ein Telekommunikationsnetz nach dem Oberbegriff des Anspruchs 6 sowie ein Sicherheits- und Tunnelgerät nach dem Oberbegriff des Anspruchs 11.

Für den Aufbau, die Kontrolle und das Beenden von bidirektionalen, z.B. auf User Datagram Protocol (UDP) basierenden Ende-zu-Ende-Verbindungen in Telekommunikationsnetzen, durch die z.B. Sprachdienste wie Voice over Internet Protocol (VoIP) oder der Austausch von Multimediadaten ermöglicht wird, verwendet man bevorzugt das sogenannte Session Initiation Protocol (SIP), da durch dieses Protokoll auch einfach zusätzliche Dienste z.B. zur Anrufkontrolle, Mobilität und Interoperabilität zwischen verschiedenen existierenden Telephonsystemen zur Verfügung gestellt werden können. Die dabei verwendeten SIP-Nachrichten werden üblicherweise ebenfalls durch UDP-Pakete transportiert. Signalisierungsnachrichten des SIP-Protokolls, wie z.B. INVITE, beinhalten die IP-Adresse und Informationen über den UDP-Port, an die die Antwort, wie z.B. 2000K, vom Empfänger der ersten Nachricht geschickt werden soll. Im sogenannten SDP-Descriptor (SDP = Session Description Protocol) enthalten die SIP-Nachrichten Informationen über den User Agent Client (UAC) d.h. den Anrufer und den User Agent Server (UAS) d.h. den Angerufenen, darunter Parameter wie z.B. IP-Adressen und UDP-Ports für den Medienfluß mittels des sogenannten Real-Time Transport Protocols (RTP).

Für Endgeräte, die sich in einem privaten IP-Bereich hinter üblicherweise benutzten Geräten wie einer Firewall mit Adresstransformationsgerät befinden, werden im SDP-Descriptor normalerweise die privaten IP-Adressen angegeben, und diese Endgeräte sind damit nicht von außerhalb des privaten IP-Bereichs adressierbar und damit nicht erreichbar. Da die gewöhnlich verwendeten Adresstransformationsgeräte am Übergang zwischen privatem und öffentlichem IP-Bereich nur in der Schicht 3 und/oder Schicht 4 des OSI-Modells (OSI = Open System Interconnection) arbeiten, werden in diesem Fall nur diejenigen IP-Adressen und Ports transformiert, die in den Headern des UDP- oder IP-Protokolls angegeben sind. Die in den SIP- oder SDP-Protokollen angegebenen IP-Adressen und Ports sind im sogenannten UDP-Payload enthalten und werden durch die Adresstransformationsgeräte nicht transformiert, was zur Folge hat, daß zwischen UAS und UAC private IP- Adressen und Ports für die Signalisierung und den RTP-Medienfluß ausgetauscht werden, mit denen keine Adressierung und keine Erreichbarkeit von Endgeräten in einem privaten IP-Bereich von außerhalb dieses privaten IP-Bereichs möglich ist. Zudem verwenden einige UAC zwei verschiedene Ports zum Senden und Empfangen von SIP-Nachrichten, was zu dem zusätzlichen Problem führt, daß selbst wenn durch eine SIP-Nachricht, wie z.B. INVITE ein sogenanntes Pinhole in der Firewall, also eine Öffnung zum Senden und Empfangen, erzeugt wird, der Empfang von Nachrichten, wie z.B. 2000K, an dem im VIA-Eintrag der SIP-Nachricht angegebenen Port nicht möglich ist, da in diesem Empfangsport, der ja in diesem Fall nicht identisch mit dem Sendeport ist, kein Pinhole geöffnet wurde und damit der Eintritt durch die Firewall verwehrt wird. Auch beim bidirektionalen RTP-Medienfluß kann es vorkommen, daß für das Senden und den Empfang von RTP-Paketen verschiedene UDP-Ports verwendet werden, so daß sich auch hier das eben erwähnte Problem stellt.

Momentan diskutierte Lösungen des obigen Problems sind z.B. sogenannte Helper-Protokolle, wie Simple Traversal of UDP Through NAT (STUN) (NAT = Network Address Translator) oder Traversal Using Relay NAT (TURN), mit deren Hilfe eine Verbindung zwischen privaten und öffentlichen IP-Adressen und Ports hergestellt wird und zudem noch Pinholes in der Firewall geöffnet werden, die einen bidirektionalen RTP-Medienfluß ermöglichen. Diese Lösungen erfordern allerdings die Installation von zusätzlicher Hardware, wie z.B. Servern im öffentlichen IP-Bereich und zudem müssen die Endgeräte, wie z.B. SIP-Telephone, mit speziellen Fähigkeiten zur Auswertung und Verwendung der Adresstransformationen ausgestattet werden. Außerdem ist die auf dem TURN-Protokoll basierende Lösung kaum skalierbar, da der gesamte Signalisierungs- und Medienverkehr über einen einzigen Server geleitet werden muß. Ferner werden durch diese Ansätze die verschiedenen Arten der Adresstransformation, wie Full Cone NAT, Restricted Cone NAT, Port Restricted Cone NAT, Symmetric NAT u.s.w. nur teilweise unterstützt.

Ein anderer Ansatz zur Lösung der Probleme besteht im Einsatz von Firewalls mit Adresstransformationsgeräten, die durch Kontrollprotokolle, wie z.B. MIDCOM, MEGACO/H.248 oder UpnP, basierend auf SIP-Informationen der Anwendungsschicht, gesteuert werden. Dies allerdings würde zum einen das Aufrüsten oder den Ersatz einer Vielzahl von Firewalls mit Adresstransformationsgeräten und zum anderen die Installation von zentralen oder dezentralen Kontrolleinheiten erfordern.

Schließlich könnte auch noch durch eine industrieweite Übereinkunft ein vollständiger Austausch der Firewalls mit Adresstransformationsgeräten in den privaten Bereichen durch Geräte mit der Fähigkeit zur SIP-Erkennung vorgenommen werden, die dadurch imstande sind, die Verwendung von verschiedenen UDP-Ports zum Senden und Empfangen zu ermöglichen.

Alle oben beschriebenen Ansätze können die erwähnten Probleme entweder nur teilweise lösen oder sind sehr kostenintensiv und komplex.

Der Erfindung liegt die Aufgabe zugrunde, an der oben beschriebenen Situation Abhilfe zu schaffen.

Diese Aufgabe wird erfindungsgemäß gelöst durch ein Verfahren zum Führen von bidirektionalen Verbindungen in einem Telekommunikationsnetz mittels eines Signalisierungs-Protokolls über eine zwischengeschaltete Firewall mit Adresstransformationsgerät nach der Lehre des Anspruchs 1, ein Telekommunikationsnetz nach der Lehre des Anspruchs 6 sowie ein Sicherheits- und Tunnelgerät nach der Lehre des Anspruchs 11.

Die grundlegende Idee der Erfindung besteht darin, daß bei bidirektionalen Ende-zu-Ende-Verbindungen mit einer zwischengeschalteten Firewall mit Adresstransformationsgerät zum Übertragen von Sprach- oder Multimediadaten sowohl die Datenpakete, die der Signalisierung z.B. durch SIP-Protokoll dienen, als auch die Datenpakete, die Medieninhalte z.B. im RTP-Format enthalten, zwischen der Domäne eines Endteilnehmers und der Domäne eines Diensteanbieters über einen Tunnel gesendet werden. Die Endpunkte dieses Tunnels bilden dabei auf Seiten des Diensteanbieters ein Session Border Controller (SBC), der die Funktionalitäten eines SIP-Proxy-Servers (z.B. Back-to-Back User Agent) und einer Medien-Vermittlungseinheit umfaßt, und auf Seiten des Endteilnehmers ein Sicherheits- und Tunnelgerät, das den Aufbau des Tunnels veranlaßt und das vorzugsweise vom Diensteanbieter bereitgestellt und kontrolliert wird. Die vom UAC, z.B. einem SIP-Phone, an den SBC adressierten Datenpakete werden dabei im Sicherheits- und Tunnelgerät detektiert und nach dem Verpacken in ein Tunnelprotokoll über den Tunnel an den jeweils zuständigen SBC verschickt, wobei in der Firewall mit Adresstransformationsgerät noch eine Transformation der IP-Adresse und des Ports des Sicherheits- und Tunnelgeräts vorgenommen wird. Wahlweise können die Datenpakete vor dem Verpacken in ein Tunnelprotokoll noch im Sicherheits- und Tunnelgerät verschlüsselt werden. Im Session Border Controller (SBC) wird der Zusammenhang zwischen der privaten IP-Adresse und dem privaten Port des UAC, an die Daten als Antwort auf eine Anfrage geschickt werden sollen und der IP-Adresse und dem Port des Sicherheits- und Tunnelgeräts gespeichert. Dadurch können private Informationen des UAC in den Signalisierungs- und Mediendaten, wie z.B. die private IP-Adresse des UAC, terminiert werden. Datenpakete, die von der Domäne des Diensteanbieters aus als Antwort auf eine Anfrage an den UAC in der Domäne des Endteilnehmers geschickt werden sollen, werden an den entsprechenden SBC geschickt, dort optional verschlüsselt, anschließend in ein Tunnelprotokoll verpackt und dann an die IP-Adresse und den Port des entsprechenden Sicherheits- und Tunnelgeräts in der Domäne des Endteilnehmers gesendet. Die Eindeutigkeit der Adresse des UAC wird dabei durch die Kombination von IP-Adresse und Port des Tunnels mit der privaten IP-Adresse und dem privaten Port des UAC, an die Daten als Antwort auf eine Anfrage geschickt werden sollen, gewährleistet, d.h. die in Tunnelpaketen eingebetteten Datenpakete enthalten als Empfängeradresse die private IP-Adresse und den privaten Port des UAC.

Die Verwendung von Tunnel zur Überwindung von Firewalls ist dabei z.B. aus den folgenden Schriften bekannt:

In der US Patentanmeldung US 2003/0126230 A1 ist eine Methode zur Übertragung von Informationen, die nicht mit der Verwendung einer Firewall kompatibel sind, über eine Firewall durch Einrichtung eines Tunnels zwischen zwei Proxy-Servern offenbart.

In der internationalen Patentanmeldung WO 03/083692 A1 ist eine Methode zur Übertragung von Daten über eine Firewall mittels eines Tunnels, der durch Plugins auf der Clientseite und der externen Serverseite errichtet wird, offenbart.

In der US Patentanmeldung US 2003/0140142 A1 ist eine Methode zur Errichtung eines virtuellen privaten Tunnels von einem privaten Gerät über eine Firewall mittels eines sicheren Hubs, der den Tunnel terminiert und die Kommunikation zwischen dem Tunnel und dem öffentlichen Netz schaltet, offenbart.

Weitere Ausgestaltungen der Erfindung sind den Unteransprüchen und der nachfolgenden Beschreibung zu entnehmen.

Im folgenden wird die Erfindung unter Zuhilfenahme der beiliegenden Zeichnung weiter erläutert.

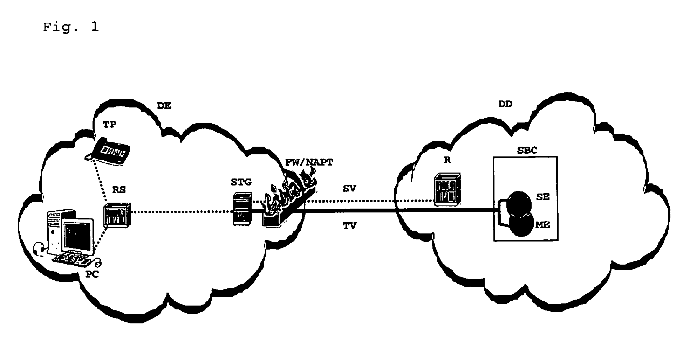

Figur 1 zeigt eine beispielhafte Netzwerkumgebung, in der die Erfindung implementiert werden kann.

Das in Figur 1 dargestellte erfindungsgemäße Telekommunikationsnetz beinhaltet die Domäne eines Endteilnehmers DE und die Domäne eines Diensteanbieters DD. Die Domäne des Endteilnehmers DE umfaßt dabei Endgeräte, wie die hier beispielhaft dargestellten Telephon TP und Computer PC, einen Router oder Switch RS, ein erfindungsgemäßes Sicherheits- und Tunnelgerät STG und eine Firewall mit Adresstransformationsgerät FW/NAPT, wobei die Firewall mit Adresstransformationsgerät FW/NAPT nicht nur Mittel zur Transformation von IP-Adressen, sondern auch Mittel zur Transformation von Ports aufweist. Die Domäne des Diensteanbieters wiederum umfaßt einen Router R und einen Session Border Controller SBC, der wiederum eine Medieneinheit ME und eine Signalisierungseinheit SE beinhaltet. In der Domäne des End-teilnehmers DE sind das Telephon TP und der Computer PC jeweils mit dem Router oder Switch RS verbunden, der wiederum mit dem Sicherheits- und Tunnelgerät STG verbunden ist. Vom Sicherheits- und Tunnelgerät STG aus besteht eine Verbindung weiter zur Firewall mit Adresstransformationsgerät FW/NAPT. Die Domäne des Endteilnehmers DE ist mit der Domäne des Diensteanbieters DD zum einen über eine Standardverbindung SV zwischen der Firewall mit Adresstransformationsgerät FW/NAPT und dem Router R und zum anderen über eine Tunnelverbindung TV zwischen der Firewall mit Adresstransformationsgerät FW/NAPT und der Signalisierungseinheit SE und der Medieneinheit ME verbunden. Der Router R und der Session Border Controller SBC können weitere Verbindungen zu Netzwerkelementen wie z.B. Servern, Gateways oder Endteilnehmergeräten innerhalb und außerhalb der Domäne des Diensteanbieters DD aufweisen, die in Figur 1 nicht eingezeichnet sind.

Das erfindungsgemäße Sicherheits- und Tunnelgerät STG weist dabei sowohl Mittel zum Empfangen und Senden von Daten, als auch Mittel zum Speichern von Daten, wie z.B. Random Access Memories (RAMs), auf. Zudem weist das Sicherheits- und Tunnelgerät STG noch Mittel zum Überprüfen der Empfängeradressen von Datenpaketen und Mittel zum Errichten einer Tunnelverbindung durch Verpacken von Datenpaketen, wie z.B. IP- oder MAC-Datenpaketen (MAC = Media Access Control), in Tunnelpaketen, wie z.B. IP-Tunnelpaketen, auf.

In einer weiteren Ausführung weist das Sicherheits- und Tunnelgerät STG Mittel auf, um durch einen Keep-Alive-Mechanismus die Verbindung zwischen dem Sicherheits- und Tunnelgerät STG durch die Firewall mit Adresstransformationsgerät FW/NAPT zum Session Border Controller SBC geöffnet zu halten.

In einer weiteren Ausführung weist das Sicherheits- und Tunnelgerät STG Mittel auf, um Daten zu verschlüsseln, bevor diese mittels eines Tunnelprotokolls in Tunnelpakete verpackt und über den Tunnel TV zum Session Border Controller SBC gesendet werden und/oder um den Payload dieser Tunnelpakete zu verschlüsseln.

In einer weiteren Ausführung weist das Sicherheits- und Tunnelgerät STG Mittel auf, um Informationen über den Session Border Controller SBC, die in den vom Session Border Controller SBC gesendeten und vom Sicherheits- und Tunnelgerät STG empfangenen Daten enthalten sind, zu überprüfen.

Bei dem erfindungsgemäßen Verfahren werden im Rahmen einer bidirektionalen, z.B. auf UDP basierenden Ende-zu-Ende-Verbindung sowohl Datenpakete, die der Signalisierung z.B. durch SIP-Protokoll dienen, als auch Datenpakete, die Medieninhalte z.B. im RTP-Format enthalten, versendet. Dabei werden Datenpakete, die von einem der als UAC fungierenden Endgeräte PC oder TP, wie z.B. einem SIP-Phone, versendet werden, an den standardmäßigen Session Border Controller SBC adressiert. Die Datenpakete gelangen von den Endgeräten TP und PC über den Router oder Switch RS zum Sicherheits- und Tunnelgerät STG. Dazu muß sichergestellt sein, daß das Sicherheits- und Tunnelgerät STG an einer Netzwerkposition innerhalb der Domäne des Endteilnehmers installiert ist, über die sämtlicher relevanter Datenverkehr, der z.B. Sprache oder Multimedia betrifft, geschickt wird. Eine solche Netzwerkposition ist z.B. der LAN-Port (LAN = Local Area Network) eines SOHO-Routers (SOHO = small office / home office) oder zwischen einem ADSL-Modem (ADSL = Asymmetric Digital Subscriber Line) und dem SOHO-Router, wobei bei der letzteren Position das Sicherheits- und Tunnelgerät STG das sogenannte Point-To-Point-Protokoll (PPP) verstehen muß und zudem sichergestellt sein muß, daß der SOHO-Router die entsprechenden Datenpakete passieren läßt. Der Übersicht halber sind in Figur 1 weder ein SOHO-Router noch ein ADSL-Modem eingezeichnet. Im Sicherheits- und Tunnelgerät STG werden diejenigen Datenpakete detektiert, die an den Session Border Controller SBC adressiert sind, und anschließend werden die entsprechenden Datenpakete, wie z.B. IP- oder MAC-Datenpakete, mittels eines Tunnelprotokolls in Tunnelpakete, wie z.B. IP-Tunnelpakete, eingepackt, und zwischen dem Sicherheits- und Tunnelgerät STG und dem Session Border Controller SBC wird ein Tunnel TV eingerichtet.

In einer vorteilhaften Ausführungsform werden im Sicherheits- und Tunnelgerät STG die Datenpakete vor dem Verpacken in ein Tunnelpaket und/oder der Payload der Tunnelpakete, z.B. durch das Protokoll IPsec, verschlüsselt. Da sowohl der Session Border Controller SBC, als auch das Sicherheits- und Tunnelgerät STG unter der Kontrolle des selben Diensteanbieters stehen, kann die Verschlüsselung durch eine kostengünstige Lösung mit einer geringeren Sicherheitsstufe erfolgen, was im Bsp. durch eine Verschlüsselung durch das Protokoll IPsec mit einem reduzierten Schlüssel realisiert werden kann. Die individuellen und/oder gemeinsamen Schlüssel können entweder im Sicherheits- und Tunnelgerät STG und/oder im Session Border Controller SBC vorkonfiguriert sein oder vom Diensteanbieter durch sogenannte Smartcards verteilt werden.

In einer weiteren vorteilhaften Ausführungsform werden im Sicherheits- und Tunnelgerät STG zumindest Endpunktinformationen des Tunnels betreffend den Session Border Controller SBC, wie z.B. die IP-Absenderadresse von empfangenen Datenpaketen, überprüft, um die Domäne des Endteilnehmers vor Angriffen aus dem öffentlichen Netz zu schützen, was allerdings eine Zugangsnetzinfrastruktur zur Voraussetzung hat, die die Erzeugung von IP-Adressen erkennt und verhindert.

Datenpakete, die nicht an den Session Border Controller SBC adressiert sind, durchlaufen das Sicherheits- und Tunnelgerät STG transparent und erreichen durch eine Standardverbindung SV über die Firewall mit Adresstransformationsgerät FW/NAPT und ein öffentliches Kommunikationsnetz den Router R in der Domäne des Diensteanbieters DD. Die Tunnelpakete werden vom Sicherheits- und Tunnelgerät STG aus zur Firewall mit Adresstransformationsgerät FW/NAPT gesendet und dort wird eine Transformation der IP-Adresse und des Ports des Sicherheits- und Tunnelgeräts STG vorgenommen, bevor die Tunnelpakete über den Tunnel TV durch ein öffentliches Kommunikationsnetz in die Domäne des Diensteanbieters DD gelangen und dort im Session Border Controller SBC empfangen werden. Im Session Border Controller SBC gelangen die Signalisierungsdaten in eine Signalisierungseinheit SE, z.B. in einen SIP-Proxy-Server, und die Mediendaten in eine Medieneinheit ME, z.B. in einen Medien-Proxy-Server. Falls die ankommenden Daten verschlüsselt sind, werden sie zudem im Session Border Controller SBC noch entschlüsselt. Der Zusammenhang zwischen der privaten IP-Adresse und dem privaten Port des UAC, an die Daten als Antwort auf eine Anfrage geschickt werden sollen und der IP-Adresse und dem Port des Sicherheits- und Tunnelgeräts STG werden im Session Border Controller SBC gespeichert, und private Informationen des UAC in den Signalisierungs- und Mediendaten, wie z.B. die private IP-Adresse des UAC, können dadurch terminiert werden.

Von der Signalisierungseinheit SE bzw. der Medieneinheit ME aus werden die Daten zu den entsprechenden Zieladressen innerhalb oder außerhalb der Domäne des Diensteanbieters DD weitergeleitet. Von den Zieladressen aus werden Datenpakete als Antwort auf die Nachricht des UAC an den entsprechenden Session Border Controller SBC geschickt. Signalisierungsdaten gelangen dabei in die Signalisierungseinheit SE und Mediendaten in die Medieneinheit ME. Im Session Border Controller SBC werden die entsprechenden Datenpakete mittels eines Tunnelprotokolls in Tunnelpakete eingepackt und über den Tunnel TV an das Sicherheits- und Tunnelgeräts STG geschickt und gelangen dabei zunächst an die Firewall mit Adresstransformationsgerät FW/NAPT.

In einer vorteilhaften Ausführungsform werden im Session Border Controller SBC die Datenpakete vor dem Verpacken in ein Tunnelpaket und/oder der Payload der Tunnelpakete, z.B. durch das Protokoll IPsec, verschlüsselt. Da der Zusammenhang zwischen der privaten IP-Adresse und dem privaten Port des UAC, an die Daten als Antwort auf eine Anfrage geschickt werden sollen und der IP-Adresse und dem Port des Sicherheits- und Tunnelgeräts STG im Session Border Controller SBC bekannt ist, ist somit die Eindeutigkeit der Empfängeradresse des UAC gewährleistet, d.h. die in den Tunnelpaketen eingebetteten Datenpakete enthalten als Empfängeradresse die private IP-Adresse und den privaten Port des UAC.

Üblicherweise ist im Session Border Controller SBC ein Mechanismus implementiert, bei dem durch wiederholtes Senden von Nachrichten an die IP-Adresse und den Port des Sicherheits- und Tunnelgeräts STG die Verbindung durch die Firewall geöffnet bleibt. Sollte ein solcher Mechanismus nicht im Session Border Controller SBC implementiert sein, so kann optional im Sicherheits- und Tunnelgerät STG ein sogenannter Keep-Alive-Mechanismus implementiert werden, um die Verbindung durch die Firewall geöffnet zu halten. In der Firewall mit Adresstransformationsgerät FW/NAPT wird nun eine Rücktransformation der IP-Adresse und des Ports des Sicherheits- und Tunnelgeräts STG vorgenommen und die Daten werden an dieses weitergeleitet. Im Sicherheits- und Tunnelgerät STG werden die Tunnelpakete wieder ausgepackt und ggf. entschlüsselt, und die in den Tunnelpaketen enthaltenen Datenpakete werden an die private IP-Adresse und den privaten Port des UAC geschickt, die bzw. der in den Datenpaketen enthalten ist.

## Patentansprüche

1. Verfahren zum Führen einer bidirektionalen Ende-zu-Ende-Verbindung zwischen einem Endteilnehmer (TP, PC) und der Domäne eines Diensteanbieters (DD) mittels eines Signalisierungs-Protokolls über eine zwischengeschaltete Firewall mit Adresstransformationsgerät (FW/NAPT), **dadurch gekennzeichnet, daß**
• mittels eines Sicherheits- und Tunnelgeräts (STG), das sich in der Ende-zu-Ende-Verbindung zwischen dem Endteilnehmer (TP, PC) und der Firewall mit Adresstransformationsgerät (FW/NAPT) in der Domäne des Endteilnehmers (DE) befindet, und eines Session Border Controllers (SBC), der sich in der Ende-zu-Ende-Verbindung in der Domäne des Diensteanbieters (DD) befindet, zwischen dem Sicherheits- und Tunnelgerät (STG) und dem Session Border Controller (SBC) ein Tunnel (TV) eingerichtet wird und ein bidirektionaler Datenaustausch zwischen dem Endteilnehmer (TP, PC) und der Domäne des Diensteanbieters (DD) im Bereich zwischen dem Sicherheits- und Tunnelgerät (STG) und dem Session Border Controller (SBC) mittels eines Tunnelprotokolls über den Tunnel (TV) erfolgt,
• und der Zusammenhang zwischen der privaten Adresse eines Endgeräts des Endteilnehmers (TP, PC) und der Adresse des Sicherheits- und Tunnelgeräts (STG) im Session Border Controller (SBC) gespeichert wird.

2. Verfahren nach Anspruch 1, **dadurch gekennzeichnet, daß** mittels des Sicherheits- und Tunnelgeräts (STG) Daten verschlüsselt werden, bevor sie mittels des Tunnelprotokolls in Tunnelpakete verpackt und über den Tunnel (TV) zum Session Border Controller (SBC) gesendet werden und/oder, daß mittels des Sicherheits- und Tunnelgeräts (STG) der Payload dieser Tunnelpakete verschlüsselt wird.

3. Verfahren nach Anspruch 1, **dadurch gekennzeichnet, daß** mittels des Session Border Controllers (SBC) Daten verschlüsselt werden, bevor sie mittels des Tunnelprotokolls in Tunnelpakete verpackt und über den Tunnel (TV) zum Sicherheits- und Tunnelgerät (STG) gesendet werden und/oder, daß mittels des Session Border Controllers (SBC) der Payload dieser Tunnelpakete verschlüsselt wird.

4. Verfahren nach Anspruch 1, **dadurch gekennzeichnet, daß** mittels des Sicherheits- und Tunnelgeräts (STG) Informationen über den Session Border Controller (SBC), die in den vom Session Border Controller (SBC) gesendeten und vom Sicherheits- und Tunnelgerät (STG) empfangenen Daten enthalten sind, überprüft werden.

5. Verfahren nach Anspruch 1, **dadurch gekennzeichnet, daß** das Sicherheits- und Tunnelgerät (STG) mittels eines Keep-Alive-Mechanimus die Verbindung durch die Firewall mit Adresstransformationsgerät (FW/NAPT) zwischen dem Sicherheits- und Tunnelgerät (STG) und dem Session Border Controller (SBC) geöffnet hält.

6. Telekommunikationsnetz zum Durchführen eines Verfahrens zum Führen einer bidirektionalen Ende-zu-Ende-Verbindung zwischen einem Endteilnehmer (TP, PC) und der Domäne eines Diensteanbieters (DD) mittels des SIP-Protokolls über eine zwischengeschaltete Firewall mit Adresstransformationsgerät (FW/NAPT), **dadurch gekennzeichnet, daß** sich ein Sicherheits- und Tunnelgerät (STG) in der Ende-zu-Ende-Verbindung zwischen dem Endteilnehmer (TP, PC) und der Firewall mit Adresstransformationsgerät (FW/NAPT) in der Domäne des Endteilnehmers (DE) befindet, daß sich ein Session Border Controller (SBC) in der Ende-zu-Ende-Verbindung in der Domäne des Diensteanbieters (DD) befindet, daß das Sicherheits- und Tunnelgerät (STG) Mittel aufweist, um zwischen dem Sicherheits- und Tunnelgerät (STG) und dem Session Border Controller (SBC) einen Tunnel (TV) einzurichten, dass der Session Border Controller (SBC) Mittel aufweist, um den Zusammenhang zwischen der privaten Adresse eines Endgeräts des Endteilnehmers (TP, PC) und der Adresse des Sicherheits- und Tunnelgeräts (STG) zu speichern, und daß das Sicherheits- und Tunnelgerät (STG) und der Session Border Controller (SBC) Mittel aufweisen, um einen bidirektionalen Datenaustausch zwischen dem Endteilnehmer (TP, PC) und der Domäne des Diensteanbieters (DD) im Bereich zwischen dem Sicherheits- und Tunnelgerät (STG) und dem Session Border Controller (SBC) mittels eines Tunnelprotokolls über den Tunnel (TV) zu ermöglichen.

7. Telekommunikationsnetz nach Anspruch 6, **dadurch gekennzeichnet, daß** das Sicherheits- und Tunnelgerät (STG) Mittel aufweist, um Daten zu verschlüsseln, bevor diese mittels des Tunnelprotokolls in Tunnelpakete verpackt und über den Tunnel (TV) zum Session Border Controller (SBC) gesendet werden und/oder um den Payload dieser Tunnelpakete zu verschlüsseln.

8. Telekommunikationsnetz nach Anspruch 6, **dadurch gekennzeichnet, daß** der Session Border Controller (SBC) Mittel aufweist, um Daten zu verschlüsseln, bevor diese mittels des Tunnelprotokolls in Tunnelpakete verpackt und über den Tunnel (TV) zum Sicherheits- und Tunnelgerät (STG) gesendet werden und/oder um den Payload dieser Tunnelpakete zu verschlüsseln.

9. Telekommunikationsnetz nach Anspruch 6, **dadurch gekennzeichnet, daß** das Sicherheits- und Tunnelgerät (STG) Mittel aufweist, um Informationen über den Session Border Controller (SBC), die in den vom Session Border Controller (SBC) gesendeten und vom Sicherheits- und Tunnelgerät (STG) empfangenen Daten enthalten sind, zu überprüfen.

10. Telekommunikationsnetz nach Anspruch 6, **dadurch gekennzeichnet, daß** das Sicherheits- und Tunnelgerät (STG) Mittel aufweist, um durch einen Keep-Alive-Mechanimus die Verbindung durch die Firewall mit Adresstransformationsgerät (FW/NAPT) zwischen dem Sicherheits- und Tunnelgerät (STG) und dem Session Border Controller (SBC) geöffnet zu halten.

11. Sicherheits- und Tunnelgerät (STG) für ein Telekommunikationsnetz zum Durchführen eines Verfahrens zum Führen einer bidirektionalen Ende-zu-Ende-Verbindung zwischen einem Endteilnehmer (TP, PC) und der Domäne eines Diensteanbieters (DD) mittels des SIP-Protokolls über eine zwischengeschaltete Firewall mit Adresstransformationsgerät (FW/NAPT), **dadurch gekennzeichnet, daß** das Sicherheits- und Tunnelgerät (STG) Mittel aufweist, um zwischen dem Sicherheits- und Tunnelgerät (STG) und einem Session Border Controller (SBC), der sich in der Ende-zu-Ende-Verbindung in der Domäne des Diensteanbieters (DD) befindet, einen Tunnel (TV) einzurichten, um einen bidirektionalen Datenaustausch zwischen dem Endteilnehmer (TP, PC) und der Domäne des Diensteanbieters (DD) im Bereich zwischen dem Sicherheits- und Tunnelgerät (STG) und dem Session Border Controller (SBC) mittels eines Tunnelprotokolls über den Tunnel (TV) zu ermöglichen, und um Datenpakete, die an den Session Border Controller (SBC) adressiert sind, zu detektieren und über den Tunnel zu verschicken.

12. Sicherheits- und Tunnelgerät (STG) nach Anspruch 11, **dadurch gekennzeichnet, daß** das Sicherheits- und Tunnelgerät (STG) Mittel aufweist, um durch einen Keep-Alive-Mechanimus die Verbindung durch die Firewall zwischen dem Sicherheits- und Tunnelgerät (STG) und dem Session Border Controller (SBC) geöffnet zu halten.

13. Sicherheits- und Tunnelgerät (STG) nach Anspruch 11, **dadurch gekennzeichnet, daß** das Sicherheits- und Tunnelgerät (STG) Mittel aufweist, um Daten zu verschlüsseln, bevor diese mittels des Tunnelprotokolls in Tunnelpakete verpackt und über den Tunnel (TV) zu dem Session Border Controller (SBC) gesendet werden und/oder um den Payload dieser Tunnelpakete zu verschlüsseln.

14. Sicherheits- und Tunnelgerät (STG) nach Anspruch 11, **dadurch gekennzeichnet, daß** das Sicherheits- und Tunnelgerät (STG) Mittel aufweist, um Informationen über den Session Border Controller (SBC), die in den vom Session Border Controller (SBC) gesendeten und vom Sicherheits- und Tunnelgerät (STG) empfangenen Daten enthalten sind, zu überprüfen.

15. Session Border Controller (SBC) für ein Telekommunikationsnetz zum Durchführen eines Verfahrens zum Führen einer bidirektionalen Ende-zu-Ende-Verbindung zwischen einem Endteilnehmer (TP, PC) und der Domäne eines Diensteanbieters (DD) mittels eines Signalisierungs-Protokolls über eine zwischengeschaltete Firewall mit Adresstransformationsgerät (FW/NAPT), **dadurch gekennzeichnet, daß** der Session Border Controller (SBC) Mittel aufweist, um den Zusammenhang zwischen der privaten Adresse eines Endgeräts des Endteilnehmers (TP, PC) und der Adresse eines Sicherheits- und Tunnelgeräts (STG), das sich in der Ende-zu-Ende-Verbindung zwischen dem Endteilnehmer (TP, PC) und der Firewall mit Adresstransformationsgerät (FW/NAPT) in der Domäne des Endteilnehmers (DE) befindet, zu speichern.

## Claims

1. Method for operating a bidirectional end-to-end connection between an end subscriber (TP, PC) and the domain of a service provider (DD) by means of a signalling protocol through an interposed firewall with address transformation device (FW/NAPT),
**characterized in that**
• by means of a security and tunnel device (STG), which is located in the end-to-end connection between the end subscriber (TP, PC) and the firewall with address transformation device (FW/NAPT) in the domain of the end subscriber (DE), and of a session border controller (SBC) which is located in the end-to-end connection in the domain of the service provider (DD), a tunnel (TV) is set up between the security and tunnel device (STG) and the session border controller (SBC) and a bidirectional data exchange takes place between the end subscriber (TP, PC) and the domain of the service provider (DD) in the area between the security and tunnel device (STG) and the session border controller (SBC) via the tunnel (TV) by means of a tunnel protocol,
• and the correlation between the private address of a terminal of the end subscriber (TP, PC) and the address of the security and tunnel device (STG) is stored in the session border controller (SBC).

2. Method according to Claim 1, **characterized in that** data is encrypted by the security and tunnel device (STG) before being packed into tunnel packets by means of the tunnel protocol and sent via the tunnel (TV) to the session border controller (SBC), and/or **in that** the payload of these tunnel packets is encrypted by the security and tunnel device (STG).

3. Method according to Claim 1, **characterized in that** data is encrypted by the session border controller (SBC) before being packed into tunnel packets by means of the tunnel protocol and sent via the tunnel (TV) to the security and tunnel device (STG), and/or **in that** the payload of these tunnel packets is encrypted by the session border controller (SBC).

4. Method according to Claim 1, **characterized in that** information about the session border controller (SBC) that is included in the data sent by the session border controller (SBC) and received by the security and tunnel device (STG) is checked by the security and tunnel device (STG).

5. Method according to Claim 1, **characterized in that** the security and tunnel device (STG) keeps open the connection through the firewall with address transformation device (FW/NAPT) between the security and tunnel device (STG) and the session border controller (SBC) by means of a keep-alive mechanism.

6. Telecommunications network for executing a method for operating a bidirectional end-to-end connection between an end subscriber (TP, PC) and the domain of a service provider (DD) by means of the SIP protocol through an interposed firewall with address transformation device (FW/NAPT), **characterized in that** a security and tunnel device (STG) is located in the end-to-end connection between the end subscriber (TP, PC) and the firewall with address transformation device (FW/NAPT) in the domain of the end subscriber (DE), that a session border controller (SBC) is located in the end-to-end connection in the domain of the service provider (DD), that the security and tunnel device (STG) has means for setting up a tunnel (TV) between the security and tunnel device (STG) and the session border controller (SBC), that the session border controller (SBC) has means of storing the correlation between the private address of a terminal of the end subscriber (TP, PC) and the address of the security and tunnel device (STG), and that the security and tunnel device (STG) and the session border controller (SBC) have means of enabling a bidirectional data exchange between the end subscriber (TP, PC) and the domain of the service provider (DD) in the area between the security and tunnel device (STG) and the session border controller (SBC) via the tunnel (TV) by means of a tunnel protocol.

7. Telecommunications network according to Claim 6, **characterized in that** the security and tunnel device (STG) has means for encrypting data before this is packed in tunnel packets with the tunnel protocol and sent via the tunnel (TV) to the session border controller (SBC), and/or for encrypting the payload of these tunnel packets.

8. Telecommunications network according to Claim 6, **characterized in that** the session border controller (SBC) has means for encrypting data before this is packed in tunnel packets with the tunnel protocol and sent via the tunnel (TV) to the security and tunnel device (STG) and/or for encrypting the payload of these tunnel packets.

9. Telecommunications network according to Claim 6, **characterized in that** the security and tunnel device (STG) has means for checking information about the session border controller (SBC) that is included in the data sent by the session border controller (SBC) and received by the security and tunnel device (STG).

10. Telecommunications network according to Claim 6, **characterized in that** the security and tunnel device (STG) has means for keeping open the connection through the firewall with address transformation device (FW/NAPT) between the security and tunnel device (STG) and the session border controller (SBC) by means of a keep-alive mechanism.

11. Security and tunnel device (STG) for a telecommunications network for executing a method for operating a bidirectional end-to-end connection between an end subscriber (TP, PC) and the domain of a service provider (DD) by means of the SIP protocol through an interposed firewall with address transformation device (FW/NAPT), **characterized in that** the security and tunnel device (STG) has means for setting up a tunnel (TV) between the security and tunnel device (STG) and a session border controller (SBC) which is located in the end-to-end connection in the domain of the service provider (DD), in order to enable a bidirectional data exchange between the end subscriber (TP, PC) and the domain of the service provider (DD) in the area between the security and tunnel device (STG) and the session border controller (SBC) via the tunnel (TV) by means of a tunnel protocol, and in order to detect data packets that are addressed to the session border controller (SBC) and send them via the tunnel.

12. Security and tunnel device (STG) according to Claim 11, **characterized in that** the security and tunnel device (STG) has means for keeping open the connection through the firewall between the security and tunnel device (STG) and the session border controller (SBC) by means of a keep-alive mechanism.

13. Security and tunnel device (STG) according to Claim 11, **characterized in that** the security and tunnel device (STG) has means for encrypting data before this is packed in tunnel packets with the tunnel protocol and sent via the tunnel (TV) to the session border controller (SBC) and/or for encrypting the payload of these tunnel packets.

14. Security and tunnel device (STG) according to Claim 11, **characterized in that** the security and tunnel device (STG) has means for checking information about the session border controller (SBC) that is included in the data sent by the session border controller (SBC) and received by the security and tunnel device (STG).

15. Session border controller (SBC) for a telecommunications network for executing a method for operating a bidirectional end-to-end connection between an end subscriber (TP, PC) and the domain of a service provider (DD) by means of a signalling protocol through an interposed firewall with address transformation device (FW/NAPT), **characterized in that** the session border controller (SBC) has means of storing the correlation between the private address of a terminal of the end subscriber (TP, PC) and the address of a security and tunnel device (STG), which is located in the end-to-end connection between the end subscriber (TP, PC) and the firewall with address transformation device (FW/NAPT) in the domain of the end subscriber (DE).

## Revendications

1. Procédé pour mettre en oeuvre une liaison point à point bidirectionnelle entre un abonné final (TP, PC) et le domaine d'un fournisseur de services (DD) au moyen d'un protocole de signalisation par le biais d'un pare-feu intermédiaire comportant un dispositif de transformation d'adresse (FW/NAPT), **caractérisé en ce que**
* au moyen d'un dispositif de sécurité et de tunnel (STG), qui se trouve dans la liaison point à point entre l'abonné final (TP, PC) et le pare-feu comportant un dispositif de transformation d'adresse (FW/NAPT) dans le domaine de l'abonné final (TP, PC), et d'un contrôleur de frontière de session (SBC), qui se trouve dans la liaison point à point dans le domaine du fournisseur de services (DD), un tunnel (TV) est établi entre le dispositif de sécurité et de tunnel (STG) et le contrôleur de frontière de session (SBC) et un échange bidirectionnel de données a lieu entre l'abonné final (TP, PC) et le domaine du fournisseur de service (DD) dans la zone entre le dispositif de sécurité et de tunnel (STG) et le contrôleur de frontière de session (SBC) au moyen d'un protocole de tunnel et par le biais du tunnel,
* et la relation entre l'adresse privée d'un terminal de l'abonné final (TP, PC) et l'adresse du dispositif de sécurité et de tunnel (STG) est mémorisée dans le contrôleur de frontière de session (SBC).

2. Procédé selon la revendication 1, **caractérisé en ce que** les données sont cryptées au moyen du dispositif de sécurité et de tunnel (STG) avant qu'elles soient mises en paquets de tunnel au moyen du protocole de tunnel et envoyées au contrôleur de frontière de session (SBC) par le biais du tunnel (TV) et/ou que la charge utile de ces paquets de tunnel est cryptée au moyen du dispositif de sécurité et de tunnel (STG).

3. Procédé selon la revendication 1, **caractérisé en ce que** les données sont cryptées au moyen du contrôleur de frontière de session (SBC) avant qu'elles soient mises en paquets de tunnel au moyen du protocole de tunnel et envoyées au dispositif de sécurité et de tunnel (STG) par le biais du tunnel (TV) et/ou que la charge utile de ces paquets de tunnel est cryptée au moyen du contrôleur de frontière de session (SBC).

4. Procédé selon la revendication 1, **caractérisé en ce que** les informations relatives au contrôleur de frontière de session (SBC) qui se trouvent dans les données envoyées par le contrôleur de frontière de session (SBC) et reçues par le dispositif de sécurité et de tunnel (STG) sont contrôlées dans le dispositif de sécurité et de tunnel (STG).

5. Procédé selon la revendication 1, **caractérisé en ce que** le dispositif de sécurité et de tunnel (STG) maintient ouverte au moyen d'un mécanisme d'entretien la liaison à travers le pare-feu comportant un dispositif de transformation d'adresse (FW/NAPT) entre le dispositif de sécurité et de tunnel (STG) et le contrôleur de frontière de session (SBC).

6. Réseau de télécommunication destiné à mettre en oeuvre un procédé pour mettre en oeuvre une liaison point à point bidirectionnelle entre un abonné final (TP, PC) et le domaine d'un fournisseur de services (DD) au moyen d'un protocole SIP par le biais d'un pare-feu intermédiaire comportant un dispositif de transformation d'adresse (FW/NAPT), **caractérisé en ce qu'**un dispositif de sécurité et de tunnel (STG) se trouve dans la liaison point à point entre l'abonné final (TP, PC) et le pare-feu comportant un dispositif de transformation d'adresse (FW/NAPT) dans le domaine de l'abonné final (TP, PC), qu'un contrôleur de frontière de session (SBC) se trouve dans la liaison point à point dans le domaine du fournisseur de services (DD), que le dispositif de sécurité et de tunnel (STG) présente des moyens pour établir un tunnel (TV) entre le dispositif de sécurité et de tunnel (STG) et le contrôleur de frontière de session (SBC), que le contrôleur de frontière de session (SBC) présente des moyens pour mémoriser la relation entre l'adresse privée d'un terminal de l'abonné final (TP, PC) et l'adresse du dispositif de sécurité et de tunnel (STG), et que le dispositif de sécurité et de tunnel (STG) et le contrôleur de frontière de session (SBC) présentent des moyens pour permettre un échange bidirectionnel de données entre l'abonné final (TP, PC) et le domaine du fournisseur de service (DD) dans la zone entre le dispositif de sécurité et de tunnel (STG) et le contrôleur de frontière de session (SBC) au moyen d'un protocole de tunnel et par le biais du tunnel.

7. Réseau de télécommunication selon la revendication 6, **caractérisé en ce que** le dispositif de sécurité et de tunnel (STG) présente des moyens pour crypter les données avant qu'elles soient mises en paquets de tunnel au moyen du protocole de tunnel et envoyées au contrôleur de frontière de session (SBC) par le biais du tunnel (TV) et/ou pour crypter la charge utile de ces paquets de tunnel.

8. Réseau de télécommunication selon la revendication 6, **caractérisé en ce que** le contrôleur de frontière de session (SBC) présente des moyens pour crypter les données avant qu'elles soient mises en paquets de tunnel au moyen du protocole de tunnel et envoyées au dispositif de sécurité et de tunnel (STG) par le biais du tunnel (TV) et/ou pour crypter la charge utile de ces paquets de tunnel.

9. Réseau de télécommunication selon la revendication 6, **caractérisé en ce que** le dispositif de sécurité et de tunnel (STG) présente des moyens pour contrôler les informations relatives au contrôleur de frontière de session (SBC) qui se trouvent dans les données envoyées par le contrôleur de frontière de session (SBC) et reçues par le dispositif de sécurité et de tunnel (STG).

10. Réseau de télécommunication selon la revendication 6, **caractérisé en ce que** le dispositif de sécurité et de tunnel (STG) présente des moyens pour maintenir ouverte au moyen d'un mécanisme d'entretien la liaison à travers le pare-feu comportant un dispositif de transformation d'adresse (FW/NAPT) entre le dispositif de sécurité et de tunnel (STG) et le contrôleur de frontière de session (SBC).

11. Dispositif de sécurité et de tunnel (STG) pour un réseau de télécommunication destiné à mettre en oeuvre un procédé pour mettre en oeuvre une liaison point à point bidirectionnelle entre un abonné final (TP, PC) et le domaine d'un fournisseur de services (DD) au moyen d'un protocole SIP par le biais d'un pare-feu intermédiaire comportant un dispositif de transformation d'adresse (FW/NAPT), **caractérisé en ce que** le dispositif de sécurité et de tunnel (STG) présente des moyens pour établir un tunnel (TV) entre le dispositif de sécurité et de tunnel (STG) et un contrôleur de frontière de session (SBC) qui se trouve dans la liaison point à point dans le domaine du fournisseur de service (DD), afin de permettre un échange bidirectionnel de données entre l'abonné final (TP, PC) et le domaine du fournisseur de service (DD) dans la zone entre le dispositif de sécurité et de tunnel (STG) et le contrôleur de frontière de session (SBC) au moyen d'un protocole de tunnel et par le biais du tunnel (TV) et pour détecter et envoyer par le biais du tunnel les paquets de données qui sont adressés au contrôleur de frontière de session (SBC).

12. Dispositif de sécurité et de tunnel (STG) selon la revendication 11, **caractérisé en ce que** le dispositif de sécurité et de tunnel (STG) présente des moyens pour maintenir ouverte par un mécanisme d'entretien la liaison à travers le pare-feu entre le dispositif de sécurité et de tunnel (STG) et le contrôleur de frontière de session (SBC).

13. Dispositif de sécurité et de tunnel (STG) selon la revendication 11, **caractérisé en ce que** le dispositif de sécurité et de tunnel (STG) présente des moyens pour crypter les données avant qu'elles soient mises en paquets de tunnel au moyen du protocole de tunnel et envoyées au contrôleur de frontière de session (SBC) par le biais du tunnel (TV) et/ou pour crypter la charge utile de ces paquets de tunnel.

14. Dispositif de sécurité et de tunnel (STG) selon la revendication 11, **caractérisé en ce que** le dispositif de sécurité et de tunnel (STG) présente des moyens pour contrôler les informations relatives au contrôleur de frontière de session (SBC) qui se trouvent dans les données envoyées par le contrôleur de frontière de session (SBC) et reçues par le dispositif de sécurité et de tunnel (STG).

15. Contrôleur de frontière de session (SBC) pour un réseau de télécommunication destiné à mettre en oeuvre un procédé pour mettre en oeuvre une liaison point à point bidirectionnelle entre un abonné final (TP, PC) et le domaine d'un fournisseur de services (DD) au moyen d'un protocole SIP par le biais d'un pare-feu intermédiaire comportant un dispositif de transformation d'adresse (FW/NAPT), **caractérisé en ce que** le contrôleur de frontière de session (SBC) présente des moyens présente pour mémoriser la relation entre l'adresse privée d'un terminal de l'abonné final (TP, PC) et l'adresse d'un dispositif de sécurité et de tunnel (STG) qui se trouve qui se trouve dans la liaison point à point entre l'abonné final (TP, PC) et le pare-feu comportant un dispositif de transformation d'adresse (FW/NAPT) dans le domaine de l'abonné final (TP, PC).
